# EUROPEAN PATENT APPLICATION

(11) **EP 4 852 098 A1**
(43) Date of publication of application: **09.12.2026**
(21) Application number: 25883059.5
(22) Date of filing: 24.10.2025
(51) Int. Cl.: H01M 4/62, H01M 4/134, H01M 4/133, H01M 4/38, H01M 4/48, H01M 4/587, H01M 10/052, H01M 4/02

(54) **ELECTRODE COMPOSITION, ELECTRODE SLURRY, ELECTRODE, AND LITHIUM SECONDARY BATTERY**

(30) Priority: 25.10.2024 KR 20240147180
(71) Applicant: LG Energy Solution, Ltd., Seoul 07335 (KR)
(72) Inventor: PARK, Jong Pil, Daejeon 34122 (KR)
(74) Representative: Plasseraud IP
(86) International application number: PCT/KR2025/017052
(87) International publication number: WO 2026/089552

(57) **Abstract**

The present application includes, as an electrode binder of a negative electrode composition or a positive electrode composition, two different types of binders that differ in whether they are soluble in an electrolyte solution. By including a soluble binder that is dissolved in the electrolyte solution, the resistance can be reduced, the output can be improved, and the life of the lithium secondary battery can be increased.

## Description

### [Technical Field]

The present invention relates to an electrode composition, an electrode slurry, an electrode, and a lithium secondary battery.

### [Crossed Reference of Related Applications]

This application claims priority to and the benefit of Korean Patent Application No. 10-2024-0147180 filed in the Korean Intellectual Property Office on October 25, 2024, and Korean Patent Application No. 10-2025-0155274 filed in the Korean Intellectual Property Office on October 24, 2025, the entire contents of which are incorporated herein by reference.

### [Background Art]

Due to the rapid increase in the use of fossil fuels, the demand for the use of alternative energy or clean energy is increasing, and as part thereof, the fields that are being studied most actively are the fields of power generation and power storage using an electrochemical reaction.

At present, a secondary battery is a representative example of an electrochemical device that uses such electrochemical energy, and the specified range of use thereof tends to be gradually expanding.

Along with the technology development and increased demand for mobile devices, the demand for secondary batteries as energy sources is increasing sharply. Among such secondary batteries, lithium secondary batteries having high energy density and voltage, long cycle life, and low self-discharging rate have been commercialized and widely used. In addition, research is being actively conducted on a method for manufacturing a high-density electrode having a higher energy density per unit volume as an electrode for such a high-capacity lithium secondary battery.

In general, a secondary battery includes a positive electrode, a negative electrode, an electrolyte, and a separator. The negative electrode includes a negative electrode active material for intercalating and deintercalating lithium ions coming out from the positive electrode, and silicon-based particles having a high discharge capacity may be used as the negative electrode active material.

In particular, in response to the demand for high-density energy batteries in recent years, researches are being actively conducted on a method for increasing a capacity by using a silicon-based compound such as Si/C or SiOₓ having a capacity 10-fold or higher than that of a graphite-based material, in combination as a negative electrode active material. A silicon-based compound, which is a high-capacity material, provides an advantage of a larger capacity compared with graphite used in the related art, but has a disadvantage in that life characteristics of the battery deteriorate due to significant volume expansion (~400%) during repeated charging and discharging processes.

Accordingly, in order to solve problems occurring when the silicon-based compound is used as the negative electrode active material, methods of suppressing the volume expansion itself, such as a method of adjusting a driving potential, a method of additionally further coating a thin film on an active material layer, and a method of adjusting a particle diameter of a silicon-based compound, or various methods for preventing a conductive path from being disconnected have been discussed. However, such methods may rather deteriorate the performance of a battery, and thus, the application thereof is limited, so that there is still a limitation in commercializing the manufacture of a battery including a negative electrode with a high content of a silicon-based compound.

In particular, research on a composition of a binder according to the volume expansion is being conducted, and research is being conducted to use a binder polymer having strong stress on the side in order to suppress the volume expansion of the negative electrode active material undergoing large volume change during charging and discharging. However, these binder polymers alone have limitations in suppressing the increase in thickness of an electrode due to the contraction and expansion of the negative electrode active material and the resulting deterioration in performance of the lithium secondary battery.

In addition, in order to solve the problems of volume expansion of the negative electrode having the silicon-based active material as described above, an aqueous binder having both dispersibility and adhesiveness is used. The aqueous binder has an advantage of improving dispersibility, but poor adhesion causes problems such as electrode detachment during volume expansion of the active material.

In addition, when the electrode composition includes two types of electrode binders, depending on the type or content of the electrode binders, the electrode binders fail to function as an electrode binder and agglomerate, which causes problems such as reduced adhesion, non-uniform coating, and pipe clogging during electrode manufacturing.

Further, a rubber-based binder may also be applied to improve adhesion. However, it is known that such an application has limitations because the silicon-based active material exhibits poor dispersibility when a rubber-based binder is included.

Therefore, research is needed on a binder that does not break a conductive network during the volume expansion of the active material and also exhibits excellent adhesion even when a high-capacity material is used to manufacture a high-capacity battery.

### Citation List

(Patent Document 1) Korean Patent Application Publication No. 2022-0048854

### [Detailed Description of the Invention]

### [Technical Problem]

Accordingly, the present invention has been made in an effort to provide an electrode composition, an electrode slurry, an electrode, and a lithium secondary battery including two types of electrode binders capable of preventing problems caused by volume changes of a negative electrode active material.

Another object of the present invention is to provide an electrode composition, an electrode slurry, an electrode, and a lithium secondary battery including two types of electrode binders capable of preventing deterioration in battery performance caused by an electrode binder added to suppress volume expansion of a negative electrode active material during charging and discharging.

### [Technical Solution]

An exemplary embodiment of the present invention provides an electrode composition including an electrode active material; and an electrode binder, wherein the electrode composition is a positive electrode composition or a negative electrode composition, the electrode binder includes a first electrode binder and a second electrode binder, the first electrode binder is an insoluble binder that does not dissolve in an electrolyte solution, the second electrode binder is a soluble binder that dissolves in the electrolyte solution, the second electrode binder is one in which a polymer having an electrolyte solution-affinitive functional group or a modified electrolyte solution-affinitive functional group is coupled to the first electrode binder, and a content of the second electrode binder with respect to the electrode active material is 0.01 or more.

An exemplary embodiment of the present invention provides an electrode slurry including the electrode composition and a solvent.

An exemplary embodiment of the present invention provides an electrode including an electrode current collector layer; and an electrode active material layer including the electrode composition on one surface or both surfaces of the electrode current collector layer.

An exemplary embodiment of the present invention provides a lithium secondary battery including a first electrode; a second electrode; a separator provided between the first electrode and the second electrode; and an electrolyte, wherein either the first electrode or the second electrode is the electrode described above.

### [Advantageous Effects]

The electrode composition according to an exemplary embodiment of the present invention can reduce resistance, improve an output, and enhance the life of a lithium secondary battery as the second electrode binder is dissolved in the electrolyte solution.

### [Brief Description of Drawings]

FIG. 1 is a schematic drawing showing an electrode including an electrode composition according to an exemplary embodiment of the present invention.
FIG. 2 is a schematic drawing showing an electrode including an electrode composition of the related art.

10: electrode active material
20: electrode binder
21: first electrode binder
22: second electrode binder

### [Best Mode]

Hereinafter, the present specification will be described in more detail.

It should be understood that the terms or words used throughout the specification should not be construed as being limited to their ordinary or dictionary meanings, but construed as having meanings and concepts consistent with the technical idea of the present invention, based on the principle that an inventor may properly define the concepts of the words or terms to best explain the invention.

As used herein, the singular forms of terms, such as "a", "an" and "the", are intended to include the plural forms as well, unless the context clearly indicates otherwise.

In the present specification, when a part is referred to as "including" a certain component, it means that the part can further include another component, not excluding another component, unless explicitly described to the contrary.

Throughout the present specification, when a member is referred to as being "on" another member, the member can be in direct contact with another member or an intervening member may also be present.

In the present specification, 'p to q' means a range of 'p or more and q or less'.

As used herein, the description "a polymer includes a certain monomer as a monomer unit" means that the monomer participates in a polymerization reaction and is included as a repeating unit in the polymer.

As used herein, when it is described that a polymer includes a monomer, this is interpreted to be the same as when the polymer includes a monomer as a monomer unit.

In the present specification, it is understood that the term 'polymer' is used in a broad sense including a copolymer unless otherwise specified as 'a homopolymer'.

In the present specification, the "weight-average molecular weight (Mw)" and "number-average molecular weight (Mn)" of a compound may be determined using the molecular weight and molecular weight distribution of the compound. Specifically, tetrahydrofuran (THF) and a compound are placed in a 1-ml glass vial to prepare a sample solution having a compound concentration of 1 wt%. A standard sample (polystyrene) and the sample solution are filtered through a filter (pore size of 0.45 µm) and injected into a GPC injector, and the molecular weight and molecular weight distribution of the compound are determined by comparing the elution time of the sample solution with a calibration curve of the standard sample. In this case, Infinity II 1260 (Agilent Co.) may be used as a measuring device, the flow rate and the column temperature may be set to is 1.00 mL/min and 40.0°C.

In the present specification, the molecular weight refers to a weight-average molecular weight unless particularly described otherwise.

Hereinafter, exemplary embodiments of the present invention will be described in detail with reference to the drawings so that one skilled in the art can readily implement the present invention. However, the present invention may be implemented in various different forms, and is not limited to the following descriptions.

### <Electrode Composition>

An exemplary embodiment of the present invention provides an electrode composition including an electrode active material; and an electrode binder, wherein the electrode composition is a positive electrode composition or a negative electrode composition, the electrode binder includes a first electrode binder and a second electrode binder, the first electrode binder is an insoluble binder that does not dissolve in an electrolyte solution, the second electrode binder is a soluble binder that dissolves in the electrolyte solution, the second electrode binder is one in which a polymer having an electrolyte solution-affinitive functional group or a modified electrolyte solution-affinitive functional group is coupled to the first electrode binder, and a content of the second electrode binder with respect to the electrode active material is 0.01 or more.

The electrode composition according to the exemplary embodiment can be maintained as an electrode because the conductive network is maintained and the migration paths of electrons and ions are secured.

The first electrode binder is an insoluble binder that does not dissolve in an electrolyte solution and can serve to enhance adhesion between electrode active material particles and between the electrode active material particles and the electrode current collector. The solubility of the first electrode binder in a solvent of the electrolyte solution may be 0.1% (w/w) or less within a temperature range of 25°C to 70°C.

The second electrode binder is a soluble binder that dissolves in the electrolyte solution. When configured in an electrode, the binder forms adhesion to suppress detachment of the electrode active material during the manufacturing process. In the presence of the electrolyte solution, the second electrode binder dissolves in the electrolyte solution, thereby forming pores at locations where the second electrode binder was present. As a result, pores are generated even in an electrode having a low porosity, and the tortuosity of the electrolyte solution is improved, which reduces resistance and improves diffusion resistance, thereby increasing the life, and an effect of increasing output can be expected. In addition, the diffusion effect of lithium ions (Li ions) allows the electrode to operate advantageously even during rapid charging.

According to an exemplary embodiment of the present invention, the electrode composition may be a positive electrode composition, the electrode active material may be a positive electrode active material, and a mass ratio of the second electrode binder to the positive electrode active material may be 0.01 or more and 0.02 or less.

Preferably, the mass ratio of the second electrode binder to the positive electrode active material may be 0.01 or more and less than 0.02, or 0.015 or less, or 0.012 or less.

In the exemplary embodiment, when the content of the second electrode binder with respect to the positive electrode active material falls within the above-described range, it becomes more advantageous in forming pores in the second electrode binder, and the electron migration path is maintained through the connection between the active material and the binder, thereby allowing the electrode to operate normally.

According to an exemplary embodiment of the present invention, the electrode composition may be a negative electrode composition, the electrode active material may be a negative electrode active material, and a mass ratio of the second electrode binder to the negative electrode active material may be 0.02 or more.

Preferably, the mass ratio of the second electrode binder to the negative electrode active material may be 0.04 or less or 0.03 or less and 0.02 or more.

In the exemplary embodiment, when the content of the second electrode binder with respect to the negative electrode active material falls within the above-described range, it becomes more advantageous in forming pores in the second electrode binder, and the electron migration path is maintained through the connection between the active material and the binder, thereby allowing the electrode to operate normally.

According to an exemplary embodiment of the present invention, both the first electrode binder and the second electrode binder may be dissolved in one or more common solvents. The solvent is used to mix an electrode binder and an electrode active material and to form an electrode slurry during the electrode manufacturing process. When the electrode slurry is applied to an electrode current collector layer and then dried to manufacture an electrode, the first electrode binder improves adhesion between electrode active material particles and between the electrode active material particles and the electrode current collector, and the second electrode binder is dissolved in the electrolyte solution to form pores, thereby generating pores even in an electrode with a low porosity. As a result, the tortuosity of the electrolyte solution is improved, which reduces resistance and improves diffusion resistance, thereby increasing the life, and an effect of increasing output can be expected. In addition, the diffusion effect of lithium ions (Li ions) allows the electrode to operate advantageously even during rapid charging.

According to an exemplary embodiment of the present invention, the solubility of the second electrode binder in the solvent of the electrolyte solution may be 1% (w/w) to 100% (w/w) within a temperature range of 20°C to 70°C. When the above range is satisfied, the porosity of the electrode can be improved as the second electrode binder is dissolved in the electrolyte solution.

According to an exemplary embodiment of the present invention, the solubility of the first electrode binder and the second electrode binder in the solvent may be 1% (w/w) to 50% (w/w) within a temperature range of 10°C to 70°C. When the above range is satisfied, the first electrode binder and the second electrode binder are well mixed, so that they can be evenly distributed on the electrode during electrode manufacturing.

According to an exemplary embodiment of the present invention, the electrode composition may be a negative electrode composition, and the first electrode binder may include at least one selected from the group consisting of fluorine-based polymer, styrene-based polymer, polyvinyl alcohol (PVA), polyacrylonitrile (PAN), starch, hydroxypropyl cellulose, regenerated cellulose, polyvinylpyrrolidone (PVP), polyethylene, polypropylene, ethylene-propylene-diene polymer (EPDM), and sulfonated-EPDM.

The fluorine-based polymer may be polyvinylidene fluoride (PVDF), tetrafluoroethylene (PTFE), or fluororubber, but is not particularly limited as long as it is an insoluble polymer.

The styrene-based polymer may be styrene-butadiene rubber (SBR), but is not particularly limited as long as it is an insoluble polymer.

According to an exemplary embodiment of the present invention, the electrode composition may be a positive electrode composition, and the first electrode binder may include at least one selected from the group consisting of polyvinylidene fluoride (PVDF), polyvinyl chloride (PVC), polyphenylene oxide (PPO), polyacrylonitrile (PAN), polymethyl methacrylate (PMMA), polyimide (PI), polysulfone (PSU), polyethylene terephthalate/polycarbonate (PET/PC), and acrylonitrile-butadiene-styrene (ABS).

According to an exemplary embodiment of the present invention, the electrolyte solution-affinitive functional group may include at least one selected from the group consisting of hexafluoropropylene (HFP), polyethylene glycol (PEO), ethylene carbonate (EC), ethyl methyl carbonate (EMC), diethyl maleate (DEM), and various copolymers thereof.

The second negative electrode binder may specifically be a polyvinylidene fluoride-hexafluoropropylene copolymer (PVDF-co-HFP), a styrene-butadiene rubber-hexafluoropropylene copolymer (styrene butadiene rubber-co-HFP), a polyvinylidene fluoride-polyethylene oxide copolymer (PVDF-co-PEO), a styrene butadiene rubber-polyethylene oxide copolymer (styrene-butadiene rubber-co-PEO), a polyvinylidene fluoride-polypropylene oxide copolymer (PVDF-co-PPO), a styrene-butadiene rubber-polypropylene oxide copolymer (styrene-butadiene rubber-co-PPO), a polyvinylidene fluoride-polyacrylonitrile copolymer (PVDF-co-PAN), or a styrene-butadiene rubber-polyacrylonitrile copolymer (styrene-butadiene rubber-co-PAN).

The electrode is a negative electrode composition, and in the case where a conventional soluble binder such as a polyvinyl alcohol (PVA)-based polymer, polyacrylic acid (PAA)-based polymer, polyethylene glycol (PEG)-based polymer, polyacrylonitrile (PAN)-based polymer, or polyacrylamide (PAM)-based polymer is used as the second electrode binder (second negative electrode binder), unlike when the second negative electrode binder in the form of a copolymer in which a polymer having an electrolyte solution-affinitive functional group or a modified electrolyte solution-affinitive functional group is coupled to the first negative electrode binder is used, when a conventional negative electrode composition includes two types of negative electrode binders, depending on the type or content of the negative electrode binders, the negative electrode binders may fail to function as a negative electrode binder or may agglomerate, which may cause problems such as reduced adhesion, non-uniform coating, and pipe clogging during negative electrode manufacturing.

The electrode composition is a positive electrode composition, and in the case where a conventional soluble binder such as poly methyl methacrylate (PMMA)-based polymer or polyimide (PI)-based polymer is used as the second electrode binder (second positive electrode binder), unlike when the second positive electrode binder in the form of a copolymer in which a polymer having an electrolyte solution-affinitive functional group or a modified electrolyte solution-affinitive functional group is coupled to the first electrode binder is used, when a conventional electrode composition includes two types of electrode binders, depending on the type or content of the electrode binders, the electrode binders may fail to function as an electrode binder or may agglomerate, which may cause problems such as reduced adhesion, non-uniform coating, and pipe clogging during electrode manufacturing.

The second electrode binder is formed in the form of a copolymer in which a polymer having an electrolyte solution-affinitive functional group or a modified electrolyte solution-affinitive functional group is coupled to the first electrode binder, so that the first electrode binder and the second electrode binder have a common chain, and therefore do not repel each other due to a difference in polarity, but can be uniformly mixed with each other like a surfactant. Therefore, when the first electrode binder and the second electrode binder according to the present invention are used, problems such as reduced adhesion, non-uniform coating, and pipe clogging during electrode manufacturing can be reduced.

According to an exemplary embodiment of the present invention, a molar ratio of the first electrode binder and the second electrode binder may be 3:7 to 7:3 or 4:6 to 6:4, and preferably 5:5. When the above range is satisfied, the electrode composition can have improved water dispersibility and further improved life performance.

The content of the first electrode binder may be 30 to 90 parts by weight, based on 100 parts by weight of the total amount of the first electrode binder and the second electrode binder, and preferably may be 30 parts by weight or more, 35 parts by weight or more, 40 parts by weight or more, 45 parts by weight or more, or 50 parts by weight or more, and 85 parts by weight or less, 80 parts by weight or less, 75 parts by weight or less, 70 parts by weight or less, 65 parts by weight or less, or 60 parts by weight or less. When the above range is satisfied, collapse of the electrode that may occur as the second electrode binder dissolves can be prevented, and pores generated as the second electrode binder dissolves can be maintained.

According to an exemplary embodiment of the present invention, the content of the second electrode binder may be 10 to 70 parts by weight, based on 100 parts by weight of the total amount of the first electrode binder and the second electrode binder, and preferably may be 10 parts by weight or more, 15 parts by weight or more, 20 parts by weight or more, 25 parts by weight or more, or 30 parts by weight or more, and 65 parts by weight or less, 60 parts by weight or less, 55 parts by weight or less, 50 parts by weight or less, 45 parts by weight or less, or 40 parts by weight or less. When the above range is satisfied, pores generated as the second electrode binder dissolves can provide advantageous effects in terms of resistance, life, output, and the like of the battery.

According to an exemplary embodiment of the present invention, a weight-average molecular weight of the first electrode binder may be 100,000 g/mol or more and 1,500,000 g/mol or less. A weight-average molecular weight of the second electrode binder may be 50,000 g/mol or more and 3,000,000 g/mol or less. When the weight-average molecular weights of the electrode binders fall within the above ranges, the electrode binder has excellent mechanical strength and high intermolecular interaction, resulting in excellent adhesion of the electrode. In addition, when the above ranges are satisfied, the viscosity of the electrode binder can be set within an appropriate range, leading to excellent coatability of an electrode when an electrode is manufactured using the same.

The electrode binder may be a negative electrode binder.

The electrode binder may be a positive electrode binder.

The electrode binder may be an aqueous binder.

When an aqueous binder is used in the electrode composition, rapid dissolution, easy processability, and high efficiency can be achieved, the viscosity of the electrode slurry can be stably controlled in the future, a long-term cycle can be secured, and additional advantages such as exhibiting high adhesion under various operating temperature conditions can be provided.

For the manufacture of the aqueous binder, a polymerization initiator is used, and examples of the polymerization initiator may include ammonium persulfate, but are not limited thereto.

According to an exemplary embodiment of the present invention, the electrolyte solution may include, but is not limited to, one or more solvents selected from ethylene carbonate (EC), propylene carbonate (PC), ethyl methyl carbonate (EMC), dimethyl carbonate (DMC), and diethyl carbonate (DEC).

The electrolyte solution may include, but is not limited to, one or more solvents selected from, for example, ethylene carbonate (EC), propylene carbonate (PC), ethyl methyl carbonate (EMC), dimethyl carbonate (DMC), diethyl carbonate (DEC), butylene carbonate (BC), gamma-butyrolactone, tetrahydrofuran, 2-methyl tetrahydrofuran, dimethylsulfoxide, 1,3-dioxolan, trimethoxy methane, dioxolan derivatives, 1,3-dimethyl-2-imidazolidinone, propylene carbonate derivatives, tetrahydrofuran derivatives, ether, methyl propionate, and ethyl propionate.

In particular, among the carbonate-based organic solvents, ethylene carbonate, and propylene carbonate, which are cyclic carbonates, are high-viscosity organic solvents and can be preferably used because they have high permittivity to dissociate a lithium salt well. When the cyclic carbonate is mixed with a linear carbonate with low viscosity and low permittivity, such as dimethyl carbonate and diethyl carbonate, in a suitable ratio and used, an electrolyte having high electric conductivity may be prepared, and therefore, may be more preferably used.

The electrode active material may be a negative electrode active material.

According to an exemplary embodiment of the present invention, the electrode active material may include one or more selected from the group consisting of a silicon-based active material and a carbon-based active material.

The content of the electrode active material may be 90 parts by weight or more and 99 parts by weight or less based on 100 parts by weight of the solid content of the electrode composition, preferably 92 parts by weight or more, or 95 parts by weight or more, and 98.5 parts by weight or less, or 98 parts by weight or less.

According to an exemplary embodiment of the present invention, the silicon-based active material may include one or more selected from the group consisting of Si, SiOₓ (0 < x <2), Si/C, and a Si alloy. The silicon-based active material has a capacity at least 10 times higher than that of the carbon-based active material, and accordingly, when the silicon-based active material is applied to an electrode, particularly a negative electrode, an electrode having a high level of energy density can be implemented even with a reduced thickness compared with a case where the carbon-based active material is included alone.

The electrode active material may include a silicon-based active material, and the silicon-based active material may include one or more selected from the group consisting of Si and SiOₓ (0 < x <2).

The silicon-based active material may only use pure silicon (Si) as the silicon-based active material. The use of pure silicon (Si) as the silicon-based active material may mean that, based on 100 parts by weight of the total silicon-based active material as described above, pure Si particles not bonded to other particles or elements are included within the above range.

The electrode composition including the silicon-based active material in the above content range is significant in that, despite the large amount of silicon-based active material, the amount of hydrogen gas generated from the silicon-based active material is significantly reduced by controlling pH of the binder.

The silicon-based active material may be present in a crystalline or amorphous form. Specifically, the silicon particles of the silicon-based active material may preferably be spherical particles, but are not limited thereto.

In the SiOₓ, SiO₂ in which x is 2 is not included, because the SiO₂ does not react with lithium ions and therefore cannot store lithium. Therefore, it is preferable that x be in the above-described range of the exemplary embodiment.

In the present specification, the silicon-based active material may be Si/C composed of a composite of Si and C. For example, each peak of Si and C may be observed by an elemental analysis method such as XRD or NMR. The silicon-carbon composite, which may be denoted as Si/C, may consist of Si and C that are not bonded to each other, but may also contain an additional component as needed. For example, the silicon-carbon composite may or may not contain silicon carbide denoted as SiC. When the silicon-carbon composite contains silicon carbide, a content thereof is 3 wt% or less. The silicon-carbon composite may be present in a crystalline state, an amorphous state, or a mixed state thereof. According to one example, C in the silicon-carbon composite may be present in an amorphous state.

According to an exemplary embodiment of the present invention, the carbon-based active material may include one or more selected from the group consisting of artificial graphite, natural graphite, hard carbon, and soft carbon.

When the electrode active material is composed of a silicon-based active material and a carbon-based active material, a compositional ratio between the silicon-based active material and the carbon-based active material may be within a range of 2:98 to 30:70. The electrode active material satisfying the above range mainly contains a carbon-based active material as a main component, and therefore, exhibits small volume expansion during charging and discharging, resulting in reduced swelling, and an additional effect of excellent conductive connectivity of the electrode.

The electrode active material may be a positive electrode active material.

The positive electrode active material may be a positive electrode active material that is typically used. Specifically, the positive electrode active material may be a layered compound such as a lithium cobalt oxide (LiCoO₂) and a lithium nickel oxide (LiNiO₂), or a compound substituted with one or more transition metals; a lithium iron oxide such as LiFe₃O₄; a lithium manganese oxide represented by chemical formula Li_{1+c1}Mn_{2-c1}O₄(0≤c1≤0.33), LiMnO₃, LiMn₂O₃ and LiMnO₂; a lithium copper oxide (Li₂CuO₂); a vanadium oxide such as LiV₃O₈, V₂O₅, and Cu₂V₂O₇; a Ni-site type lithium nickel oxide represented by chemical formula LiNi_{1-c2}M_{c2}O₂ (where M is at least one selected from the group consisting of Co, Mn, Al, Cu, Fe, Mg, B, and Ga, and satisfies 0.01≤c2≤0.3); a lithium manganese composite oxide represented by chemical formula LiMn_{2-c3}M_{c3}O₂ (where M is at least one selected from the group consisting of Co, Ni, Fe, Cr, Zn, and Ta, and satisfies 0.01≤c3≤0.1) or Li₂Mn₃MO₈ (where M is at least one selected from the group consisting of Fe, Co, Ni, Cu, and Zn); LiMn₂O₄ in which a part of Li of the chemical formula is substituted with an alkaline earth metal ion, or the like, but is not limited thereto.

According to an exemplary embodiment of the present invention, the electrode composition may include an electrode conductive material, and the content of the electrode conductive material may be 0.03 parts by weight or more and 40 parts by weight or less based on 100 parts by weight of the electrode composition. Specifically, the conductive material may be included in an amount of 0.03 parts by weight or more and 40 parts by weight or less, preferably 0.05 parts by weight or more and 30 parts by weight or less, and more preferably 0.5 parts by weight or more and 25 parts by weight or less, based on 100 parts by weight of the electrode composition.

According to an exemplary embodiment of the present invention, the electrode composition may include an electrode conductive material, and the electrode conductive material may include one or more selected from the group consisting of a point-like conductive material, a planar conductive material, and a linear conductive material.

The electrode conductive material may include a point-like conductive material and a linear conductive material.

The point-like conductive material refers to a point-like or spherical conductive material that may be used to improve conductivity of an electrode and has conductivity without causing a chemical change. Specifically, the point-like conductive material may be at least one selected from the group consisting of natural graphite, artificial graphite, carbon black, acetylene black, Ketjen black, channel black, furnace black, lamp black, thermal black, conductive fiber, fluorocarbon, aluminum powder, nickel powder, zinc oxide, potassium titanate, titanium oxide, and a polyphenylene derivative, and preferably may include carbon black and/or artificial graphite in terms of implementing high conductivity and excellent dispersibility.

The planar conductive material may improve conductivity by increasing planar contact between silicon particles in the electrode, and at the same time, suppress disconnection of conductive paths due to volume expansion. The planar conductive material may be expressed as a plate-like conductive material or a bulk-type conductive material. Examples of the planar conductive material may include at least one selected from the group consisting of plate-like graphite, graphene, graphene oxide, and graphite flakes and may be preferably plate-like graphite.

The linear conductive material may be carbon nanotubes. The carbon nanotubes may be bundle-type carbon nanotubes. The bundle-type carbon nanotubes may include a plurality of carbon nanotube units. Specifically, the term 'bundle type' herein refers to, unless otherwise specified, a bundle or rope-shaped secondary shape in which a plurality of carbon nanotube units are aligned side by side in such an orientation that longitudinal axes of the carbon nanotube units are substantially the same, or are entangled. The carbon nanotube unit has a graphite sheet having a cylindrical shape with a nano-sized diameter, and has an sp² bonding structure. In this case, the characteristics of a conductive material or a semiconductive material may be exhibited depending on the rolled angle and structure of the graphite sheet. As compared with entangled-type carbon nanotubes, the bundle-type carbon nanotubes can be more uniformly dispersed during the manufacture of the negative electrode, and can form more smoothly a conductive network in the negative electrode to improve the conductivity of the negative electrode.

The electrode conductive material may be a negative electrode conductive material.

The electrode conductive material may be a positive electrode conductive material.

The negative electrode conductive material is applied to the negative electrode and has a completely separate configuration from a positive electrode conductive material that is applied to the positive electrode. That is, the negative electrode conductive material serves to support a contact point between silicon-based active materials, which undergo a large volume expansion of the electrode due to charging and discharging, whereas the positive electrode conductive material serves to impart partial conductivity while playing a buffer role as a cushioning material when rolled, so the configurations and roles of the negative electrode conductive material and the positive electrode conductive material are different from each other.

The positive electrode conductive material is used to impart conductivity to the electrode, and can be used without particular limitation as long as it has electronic conductivity without causing a chemical change in a battery to be configured. Specific examples may include graphite such as natural graphite and artificial graphite; a carbon-based material such as carbon black, acetylene black, Ketjen black, channel black, furnace black, lamp black, thermal black and carbon fiber; metal powders or metal fibers such as copper, nickel, aluminum and silver; a conductive whisker such as zinc oxide and potassium titanate; a conductive metal oxide such as titanium oxide; or a conductive polymer such as polyphenylene derivative, or the like, and any one thereof or a mixture of two or more thereof may be used.

According to an exemplary embodiment of the present invention, the electrode composition may further include a thickener, the type and content of which are not particularly limited, and for example, carboxymethyl cellulose (CMC) may be used as the thickener.

### <Method for Manufacturing Electrode Composition>

The electrode composition of the present invention may be manufactured by the steps of preparing an electrode active material; preparing a first electrode binder; preparing a second electrode binder; and adding an electrode conductive material. In the present specification, the above-described contents may be applied to the electrode active material, the first electrode binder, the second electrode binder, and the conductive material, and the like.

### <Electrode Slurry>

An electrode slurry according to an exemplary embodiment of the present invention includes the above-described electrode composition and solvent.

The solvent may include those known in the art. For example, the solvent may be water (e.g., distilled water) or N-methyl-2-pyrrolidone (NMP), but is not limited thereto.

The electrode slurry may be a negative electrode slurry, and therefore the electrode composition may be for a negative electrode slurry.

The electrode slurry may be a positive electrode slurry, and therefore the electrode composition may be for a positive electrode slurry.

In some cases, when the viscosity of the electrode slurry is controlled in an appropriate range by appropriately adjusting an average particle diameter (D50) of the silicon-based active material or appropriately adjusting a specific surface area of the silicon-based active material, the dispersion of components (for example, a conductive material, a binder, a silicon-based active material, and a carbon-based active material) in the electrode slurry can be improved. Accordingly, the contact area between the components may be improved, so that a conductive network can be maintained, the capacity retention rate can be increased, and non-uniformity of current density during charging and discharging can be prevented.

Additionally, in some cases, the viscosity of the electrode slurry may be adjusted to 5000 cps to 20000 cps. When the viscosity falls within the above range, storage stability is excellent, and excellent coatability is exhibited when the electrode slurry is coated on one surface or both surfaces of an electrode current collector layer in the future.

### <Electrode>

An electrode according to an exemplary embodiment of the present invention includes an electrode current collector layer; and an electrode active material layer including the above-described electrode composition on one surface or both surfaces of the electrode current collector layer.

The electrode may be a negative electrode, and accordingly, the electrode current collector layer, the electrode slurry, and the electrode active material layer are all for the negative electrode.

The negative electrode current collector layer generally has a thickness of 1 µm to 100 µm. Such a negative electrode current collector layer is not particularly limited as long as it has high conductivity without causing a chemical change in the battery. For example, copper, stainless steel, aluminum, nickel, titanium, fired carbon, copper or stainless steel each surface-treated with carbon, nickel, titanium, silver, or the like, an aluminum-cadmium alloy, or the like may be used. In addition, the negative electrode current collector layer may have microscopic irregularities formed on a surface to enhance a bonding force of the negative electrode active material, and may be used in various forms such as a film, a sheet, a foil, a net, a porous body, a foamed body, or a non-woven fabric body.

There is provided a negative electrode for a lithium secondary battery in which a thickness of the negative electrode current collector layer is 1 µm or more and 100 µm or less, and a thickness of the negative electrode active material layer is 20 µm or more and 500 µm or less. However, the thickness may be variously modified depending on a type and a use of negative electrode used, and is not limited thereto.

The electrode may be a positive electrode, and accordingly, the electrode current collector layer, the electrode slurry, and the electrode active material layer are all for the positive electrode.

The positive electrode may include a positive electrode current collector and a positive electrode active material layer formed on the positive electrode current collector and including the positive electrode active material.

In the positive electrode, the positive electrode current collector is not particularly limited as long as it has conductivity without causing a chemical change in the battery. For example, stainless steel, aluminum, nickel, titanium, calcined carbon, aluminum or stainless steel each surface-treated with carbon, nickel, titanium, silver, or the like, or the like may be used. In addition, the positive electrode current collector may typically have a thickness of 3 µm to 500 µm, and a surface of the current collector may be formed with microscopic irregularities to enhance adhesive force of the positive electrode active material. For example, the positive electrode current collector may be used in various forms such as a film, a sheet, a foil, a net, a porous body, a foamed body, and a non-woven fabric body.

The positive electrode may be Li metal.

The positive electrode active material layer may include a positive electrode conductive material and a positive electrode binder together with the positive electrode active material described above.

### <Lithium Secondary Battery>

An exemplary embodiment of the present invention provides a lithium secondary battery including a first electrode; a second electrode; a separator provided between the first electrode and the second electrode; and an electrolyte, wherein either the first electrode or the second electrode is the electrode described above.

Specifically, the first electrode may be a negative electrode and the second electrode may be a positive electrode, or the first electrode may be a positive electrode and the second electrode may be a negative electrode.

Specifically, the lithium secondary battery may include a negative electrode, a positive electrode, a separator interposed between the positive electrode and the negative electrode, and an electrolyte, wherein the negative electrode is the same as the negative electrode described above. Since the negative electrode has been described above, a detailed description thereof is omitted.

The separator serves to separate the negative electrode and the positive electrode and to provide a migration pathway for lithium ions, in which any separator may be used as the separator without particular limitation as long as it is typically used in a secondary battery, and particularly, a separator having high moisture-retention ability for an electrolyte as well as a low resistance to the migration of electrolyte ions may be preferably used. Specifically, a porous polymer film, for example, a porous polymer film manufactured from a polyolefin-based polymer, such as an ethylene homopolymer, a propylene homopolymer, an ethylene/butene copolymer, an ethylene/hexene copolymer, and an ethylene/methacrylate copolymer, or a stacked structure having two or more layers thereof may be used. In addition, a usual porous non-woven fabric, for example, a non-woven fabric made of high melting point glass fibers, polyethylene terephthalate fibers, or the like may be used. Furthermore, a coated separator including a ceramic component or polymer material may be used so as to secure heat resistance or mechanical strength, and a separator having a single layer or multilayer structure may be selectively used.

Examples of the electrolyte may include an organic-based liquid electrolyte, an inorganic-based liquid electrolyte, a solid polymer electrolyte, a gel-type polymer electrolyte, a solid inorganic electrolyte, or a molten-type inorganic electrolyte that may be used when manufacturing a lithium secondary battery, but are not limited thereto.

Specifically, the electrolyte may include a metal salt.

A lithium salt may be used as the metal salt, and the lithium salt is a material that is readily soluble in the non-aqueous electrolyte, in which, for example, one or more selected from the group consisting of F⁻, Cl⁻, I⁻, NO₃⁻, N(CN)₂⁻, BF₄⁻, ClO₄⁻, PF₆⁻, (CF₃)₂PF₄⁻, (CF₃)₃PF₃⁻, (CF₃)₄PF₂⁻, (CF₃)₅PF⁻, (CF₃)₆P⁻, CF₃SO₃⁻, CF₃CF₂SO₃⁻, (CF₃SO₂)₂N⁻, (FSO₂)₂N⁻, CF₃CF₂(CF₃)₂CO⁻, (CF₃SO₂)₂CH⁻, (SF₅)₃C⁻, (CF₃SO₂)₃C⁻, CF₃(CF₂)₇SO₃⁻, CF₃CO₂⁻, CH₃CO₂⁻, SCN⁻, and (CF₃CF₂SO₂)₂N⁻ may be used as an anion of the lithium salt.

One or more additives, for example, a haloalkylene carbonate-based compound such as difluoroethylene carbonate, pyridine, triethylphosphite, triethanolamine, cyclic ether, ethylenediamine, n-glyme, hexaphosphoric triamide, a nitrobenzene derivative, sulfur, a quinone imine dye, N-substituted oxazolidinone, N,N-substituted imidazolidine, ethylene glycol dialkyl ether, an ammonium salt, pyrrole, 2-methoxy ethanol, or aluminum trichloride, may be further included in the electrolyte for the purpose of improving life characteristics of the battery, suppressing a decrease in battery capacity, improving discharge capacity of the battery, and the like, in addition to the above-described electrolyte components.

An exemplary embodiment of the present invention provides a battery module including the lithium secondary battery as a unit cell, and a battery pack including the battery module. Alternatively, a battery pack including the lithium secondary battery is provided. Since the battery module and the battery pack include the secondary battery having high capacity, high-rate capability, and high cycle characteristics, the battery module and the battery pack may be used as a power source of a medium to large sized device selected from the group consisting of an electric vehicle, a hybrid electric vehicle, a plug-in hybrid electric vehicle, and a power storage system.

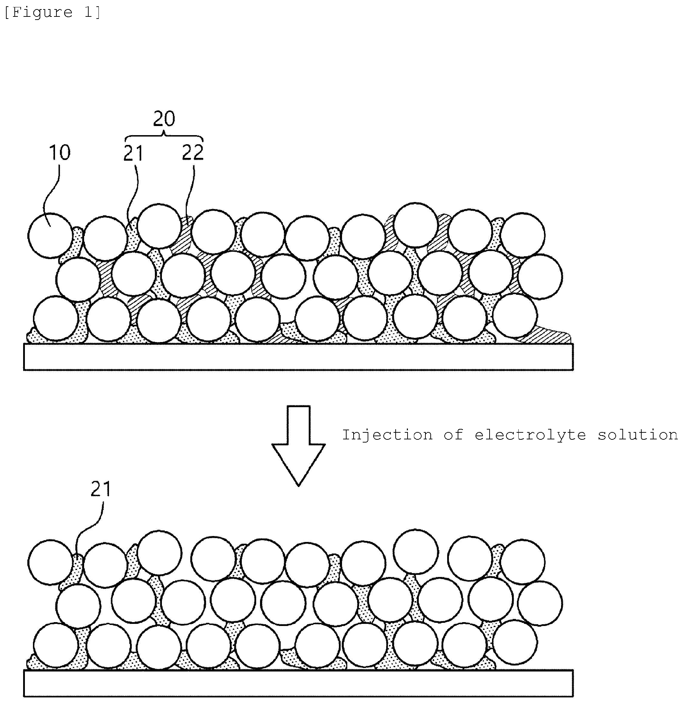

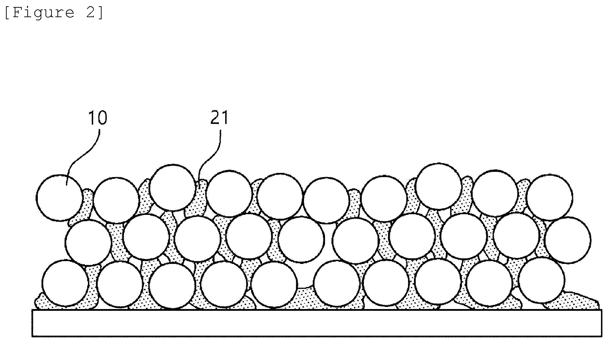

FIG. 1 is a schematic drawing showing an electrode including an electrode composition according to an exemplary embodiment of the present invention, and FIG. 2 is a schematic drawing showing an electrode including an electrode composition of the related art. According to FIG. 1, it can be confirmed that when the first electrode binder and the second electrode binder are used and introduced into the electrolyte solution, the effects of resistance reduction, output improvement, and life increase are obtained. However, according to FIG. 2, it can be confirmed that when one type of binder is used and introduced into the electrolyte solution, the effects of resistance reduction, output improvement, and life increase are not obtained.

### [Best Mode]

Hereinafter, preferred examples will be provided for better understanding of the present invention. It will be apparent to one skilled in the art that the examples are only provided to illustrate the present invention and various modifications and alterations are possible within the scope and technical spirit of the present invention. Such modifications and alterations naturally fall within the scope of claims included herein.

### <Preparation Example 1: Preparation of Negative Electrode Binder>

### Preparation Example 1-1

In a reactor equipped with a stirrer, a thermometer, a reflux condenser, and a nitrogen gas inlet pipe, a first negative electrode binder, which is styrene-butadiene rubber (SBR), was prepared at a content of 2.3%, and a second negative electrode binder, which is styrene butadiene rubber-hexafluoropropylene copolymer (SBR-co-HFP), was prepared at a content of 2%. Thereafter, the binders were dissolved in distilled water and mixed in a binder-mixing reactor to prepare a negative electrode binder under room temperature conditions.

### Preparation Example 1-2

In a reactor equipped with a stirrer, a thermometer, a reflux condenser, and a nitrogen gas inlet pipe, a first negative electrode binder, which is polyvinylidene fluoride (PVDF), was prepared at a content of 2.3%, and a second negative electrode binder, which is polyvinylidene fluoride-hexafluoropropylene copolymer (PVDF-co-HFP), was prepared at a content of 2%. Thereafter, the binders were dissolved in N-methyl-2-pyrrolidone (NMP) and mixed in a binder-mixing reactor to prepare a negative electrode binder under room temperature conditions.

### Comparative Preparation Example 1-1

In a reactor equipped with a stirrer, a thermometer, a reflux condenser, and a nitrogen gas inlet pipe, a first negative electrode binder, which is styrene-butadiene rubber (SBR), was prepared at a content of 4.3%, and then dissolved in distilled water and mixed in a binder-mixing reactor to prepare a negative electrode binder under room temperature conditions.

### <Preparation Example 2: Preparation of Positive Electrode Binder>

### Preparation Example 2-1

In a reactor equipped with a stirrer, a thermometer, a reflux condenser, and a nitrogen gas inlet pipe, a first positive electrode binder, which is polyvinylidene fluoride (PVDF), was prepared at a content of 1%, a second positive electrode binder, which is polyvinylidene fluoride-hexafluoropropylene copolymer (PVDF-co-HFP), was prepared at a content of 1%, and then the binders were mixed in the presence of N-methyl-2-pyrrolidone (NMP) to prepare a positive electrode binder under room temperature conditions.

### Preparation Example 2-2

A positive electrode binder was prepared in the same manner as in Preparation Example 2-1, except that a first positive electrode binder, which is polyvinyl chloride (PVC), was prepared at a content of 1%, a second positive electrode binder, which is polyvinyl chloride-hexafluoropropylene copolymer (PVC-co-HFP), was prepared at a content of 1%, and then the binders were mixed in the presence of tetrahydrofuran (THF).

### <Example 1: Preparation of Negative Electrode

### Composition>

Each negative electrode composition having the composition and content (based on % (w/w)) of Table 1 below was prepared.

**[Table 1]**

| No. | Negative Electrode Active Material | | First negative electrode binder | | Second negative electrode binder | | Conductive Material | | Thickener | |
|---|---|---|---|---|---|---|---|---|---|---|
| | type | content | type | content | type | content | type | content | type | content |
| Comparative Example 1-1 | Graphite | 93.7% | SBR | 4.3% | - | - | Carbon black | 1% | CMC | 1% |
| Example 1-1 | Graphite | 93.7% | SBR | 2.3% | SBR-HFP | 2% | Carbon black | 1% | CMC | 1% |
| Example 1-2 | Graphite | 93.7% | PVDF | 2.3% | PVDF-HFP | 2% | Carbon black | 1% | CMC | 1% |

### <Example 2: Preparation of Positive Electrode

### Composition>

Each positive electrode composition having the composition and content (based on % (w/w)) of Table 2 below was prepared.

**[Table 2]**

| No. | Positive electrode active material | | First positive electrode binder | | Second positive electrode binder | | Conductive Material | |
|---|---|---|---|---|---|---|---|---|
| | type | content | type | content | type | content | type | content |
| Example 2-1 | NCM | 97% | PVDF | 1% | PVDF-HFP | 1% | CNT | 1% |
| Example 2-2 | NCM | 97% | PVC | 1% | PVC-HFP | 1% | CNT | 1% |

### <Preparation Examples: Preparations of Electrode and Lithium Secondary Battery>

### Example 3-1: Preparations of Negative Electrode and Lithium Secondary Battery

A negative electrode slurry was prepared by adding a negative electrode composition having the composition of Example 1-1 in Table 1 to distilled water serving as a solvent for forming a negative electrode slurry. Thereafter, a negative electrode active material layer was coated to a thickness of 38 µm at a negative electrode loading amount of 76.34 mg/25 cm² on a Cu foil having a thickness of 8 µm, which was then dried at 130°C for 12 hours and roll-pressed to prepare a negative electrode. Lithium metal was used as a positive electrode, a polyolefin separator was interposed between the negative electrode and the lithium metal, and an electrolyte containing 1 M LiPF₆ dissolved in a solvent in which ethylene carbonate (EC) and diethyl carbonate (DEC) were mixed at a volume ratio of 30:70 was injected, thereby preparing a lithium secondary battery.

### Example 3-2: Preparations of Negative Electrode and Lithium Secondary Battery

A negative electrode and a lithium secondary battery were prepared in the same manner as in Example 3-1, except that the negative electrode composition having the composition of Example 1-2 in Table 1 was added to N-methyl-2-pyrrolidone (NMP) serving as a solvent for forming a negative electrode slurry to prepare a negative electrode slurry.

### Comparative Example 3-1: Preparations of Negative Electrode and Lithium Secondary Battery

A negative electrode and a lithium secondary battery were prepared in the same manner as in Example 3-1, except that the negative electrode composition having the composition of Comparative Example 1-1 in Table 1 was added to prepare a negative electrode slurry.

### Example 4-1: Preparations of Positive Electrode and Lithium Secondary Battery

A positive electrode slurry was prepared by adding the positive electrode composition having the composition of Example 2-1 in Table 2 to N-methyl-2-pyrrolidone (NMP) serving as a solvent for forming a positive electrode slurry. Thereafter, the positive electrode slurry was coated at a loading amount of 537 mg/25 cm² on both surfaces of an aluminum current collector (thickness: 12 µm) serving as a positive electrode current collector, which was then roll-pressed and dried in a vacuum oven at 130°C for 10 hours to form a positive electrode active material layer (thickness: 65 µm), thereby preparing a positive electrode. A Si negative electrode was used as a positive electrode, a polyolefin separator was interposed between the negative electrode and the positive electrode, and an electrolyte containing 1 M LiPF₆ dissolved in a solvent in which ethylene carbonate (EC) and diethyl carbonate (DEC) were mixed at a volume ratio of 30:70 was injected, thereby preparing a lithium secondary battery.

### Example 4-2: Preparations of Positive Electrode and Lithium Secondary Battery

A positive electrode and a lithium secondary battery were prepared in the same manner as in Example 4-1, except that the positive electrode composition having the composition of Example 2-2 in Table 2 was added to tetrahydrofuran (THF) serving as a solvent for forming a positive electrode slurry to prepare a positive electrode slurry.

### <Experimental Examples: Evaluation of Battery Characteristics>

### Experimental Example 1: Initial Capacity Efficiency and Energy Efficiency

The lithium secondary batteries prepared above were evaluated for life and capacity retention rate using an electrochemical charge/discharge tester. The lithium secondary batteries were tested for 3 cycles under conditions of 4.2-2.5 V and 0.3 C/0.3 C, and the charge capacity and energy and the discharge capacity and energy at the third cycle were measured to evaluate the efficiency. The results are shown in Table 3 below.

### Experimental Example 2: Resistance

The SOC was set to 50%, and pulses of 0.3C, 0.5C, 1C, and 1.5C were applied in both charge and discharge directions for 10 seconds each. The average of the direct current internal resistance (DCIR) was derived to evaluate the resistance. The results are shown in Table 3.

### Experimental Example 3: Charging Output

The prepared lithium secondary batteries were charged at 2.5C in the charging direction under conditions of 25°C and 80% SOC until the voltage reached 4.3 V, and the time required to reach the end of charging was measured to evaluate the charging output. The results are shown in Table 3 below.

**[Table 3]**

| No. | Charge capacity (0.33C) (Ah) | Discharge capacity (0.33C) (Ah) | Capacity efficiency (%) | C. Energy (0.33C) (Wh) | D. Energy (0.33C) (Wh) | Energy efficiency (%) | Nominal Voltage | Resistance (mΩ) | Charge capacity Output |
|---|---|---|---|---|---|---|---|---|---|
| Comparative Example 3-1 | 45.4 | 45.5 | 100.3 | 173.9 | 167.7 | 96.5 | 3.7 | 1.251 | 14.9 |
| Example 3-1: | 46.3 | 46.2 | 99.9 | 177.0 | 170.9 | 96.5 | 3.7 | 1.195 | 16 |
| Example 3-2 | 46.6 | 46.5 | 99.9 | 178.1 | 172.0 | 96.6 | 3.7 | 1.199 | 16.1 |
| Example 4-1: | 46.2 | 46.1 | 99.9 | 176.7 | 170.4 | 96.4 | 3.7 | 1.208 | 16.5 |
| Example 4-2 | 46.5 | 46.4 | 99.8 | 177.8 | 171.5 | 96.5 | 3.7 | 1.192 | 16.9 |

According to Table 3, in Example 3-1, a first negative electrode binder of styrene-butadiene rubber (SBR) and a second negative electrode binder of styrene-butadiene rubber-hexafluoropropylene copolymer (SBR-co-HFP) were used; in Example 3-2, a first negative electrode binder of polyvinylidene fluoride (PVDF) and a second negative electrode binder of polyvinylidene fluoride-hexafluoropropylene copolymer (PVDF-co-HFP) were used; in Example 4-1, a first positive electrode binder of polyvinylidene fluoride (PVDF) and a second positive electrode binder of polyvinylidene fluoride-hexafluoropropylene copolymer (PVDF-co-HFP) were used; and in Example 4-2, a first positive electrode binder of polyvinyl chloride (PVC) and a second positive electrode binder of polyvinyl chloride-hexafluoropropylene copolymer (PVC-co-HFP) were used. Since the first electrode binder and the second electrode binder shared a common chain, they did not repel each other due to a difference in polarity but could be uniformly mixed like a surfactant. As the second electrode binder was dissolved in the electrolyte solution, pores were formed in the regions where the second electrode binder had been present, and pores were thereby generated even in an electrode having a low porosity. As a result, the tortuosity of the electrolyte solution was improved, the resistance was reduced, the diffusion resistance was improved, the life was increased, and the output was enhanced.

In contrast, in Comparative Example 3-1, since the second negative electrode binder was not used, pores were not formed, and the resistance was higher and the output was lower than those of the Examples.

## Claims

1. An electrode composition comprising:
an electrode active material; and
an electrode binder, wherein
the electrode composition is a positive electrode composition or a negative electrode composition,
the electrode binder comprises a first electrode binder and a second electrode binder,
the first electrode binder is an insoluble binder that does not dissolve in an electrolyte solution,
the second electrode binder is a soluble binder that dissolves in the electrolyte solution,
the second electrode binder is one in which a polymer having an electrolyte solution-affinitive functional group or a modified electrolyte solution-affinitive functional group is coupled to the first electrode binder, and
a content of the second electrode binder with respect to the electrode active material is 0.01 or more.

2. The electrode composition of claim 1, wherein
the electrode composition is a positive electrode composition,
the electrode active material is a positive electrode active material, and
a mass ratio of the second electrode binder to the positive electrode active material is 0.01 or more and 0.02 or less.

3. The electrode composition of claim 1, wherein
the electrode composition is a negative electrode composition,
the electrode active material is a negative electrode active material, and
a mass ratio of the second electrode binder to the negative electrode active material is 0.02 or more.

4. The electrode composition of claim 1, wherein both the first electrode binder and the second electrode binder are dissolved in one or more common solvents.

5. The electrode composition of claim 1, wherein a solubility of the second electrode binder in a solvent of the electrolyte solution is 1% (w/w) to 100% (w/w) within a temperature range of 20°C to 70°C.

6. The electrode composition of claim 5, wherein a solubility of the first electrode binder and the second electrode binder in the solvent is 1% (w/w) to 50% (w/w) within a temperature range of 10°C to 70°C.

7. The electrode composition of claim 1, wherein
the electrode composition is a negative electrode composition, and
the first electrode binder comprises at least one selected from the group consisting of a fluorine-based polymer, a styrene-based polymer, polyvinyl alcohol (PVA), polyacrylonitrile (PAN), starch, hydroxypropyl cellulose, regenerated cellulose, polyvinylpyrrolidone (PVP), polyethylene, polypropylene, ethylene-propylene-diene polymer (EPDM), and sulfonated-EPDM.

8. The electrode composition of claim 1, wherein
the electrode composition is a positive electrode composition, and
the first electrode binder comprises at least one selected from the group consisting of polyvinylidene fluoride (PVDF), polyvinyl chloride (PVC), polyphenylene oxide (PPO), polyacrylonitrile (PAN), polymethyl methacrylate (PMMA), polyimide (PI), polysulfone (PSU), polyethylene terephthalate/polycarbonate (PET/PC), and acrylonitrile-butadiene-styrene (ABS).

9. The electrode composition of claim 1, wherein the electrolyte solution-affinitive functional group comprises at least one selected from the group consisting of hexafluoropropylene (HFP), polyethylene glycol (PEO), ethylene carbonate (EC), ethyl methyl carbonate (EMC), diethyl maleate (DEM), and various copolymers thereof.

10. The electrode composition of claim 1, wherein the electrolyte solution comprises one or more solvents selected from ethylene carbonate (EC), propylene carbonate (PC), ethyl methyl carbonate (EMC), dimethyl carbonate (DMC), and diethyl carbonate (DEC).

11. The electrode composition of claim 1, wherein a total amount of the first electrode binder and the second electrode binder is 0.5 parts by weight or more and 30 parts by weight or less based on 100 parts by weight of a solid content of the electrode composition.

12. The electrode composition of claim 1, wherein a content of the second electrode binder is 10 to 70 parts by weight based on 100 parts by weight of a total amount of the first electrode binder and the second electrode binder.

13. The electrode composition of claim 1, wherein a weight-average molecular weight of the first electrode binder is 100,000 g/mol or more and 1,500,000 g/mol or less.

14. The electrode composition of claim 1, wherein the electrode active material comprises one or more selected from the group consisting of a silicon-based active material and a carbon-based active material.

15. The electrode composition of claim 14, wherein the silicon-based active material comprises one or more selected from the group consisting of Si, SiOₓ (0 < x <2), Si/C, and a Si alloy.

16. The electrode composition of claim 14, wherein the carbon-based active material comprises one or more selected from the group consisting of artificial graphite, natural graphite, hard carbon, and soft carbon.

17. The electrode composition of claim 1, wherein the electrode composition comprises an electrode conductive material, and the electrode conductive material is included in an amount of 0.03 parts by weight or more and 40 parts by weight or less based on 100 parts by weight of the electrode composition.

18. The electrode composition of claim 1, wherein the electrode composition comprises an electrode conductive material, and the electrode conductive material comprises one or more selected from the group consisting of a point-like conductive material, a planar conductive material, and a linear conductive material.

19. An electrode slurry comprising:
the electrode composition of any one of claims 1 to 18, and;
a solvent.

20. An electrode comprising:
an electrode current collector layer; and
an electrode active material layer comprising the electrode composition of any one of claims 1 to 18 on one surface or both surfaces of the electrode current collector layer.

21. A lithium secondary battery comprising:
a first electrode;
a second electrode;
a separator provided between the first electrode and the second electrode; and
an electrolyte,
wherein either the first electrode or the second electrode is the electrode of claim 20.

22. A battery module comprising the lithium secondary battery of claim 21.

23. A battery pack comprising the lithium secondary battery of claim 21.

24. A battery pack comprising the battery module of claim 22.
